(19) 

**Europäisches Patentamt**
**European Patent Office**
**Office européen des brevets**

(11) **EP 4 317 467 A1**

(12) **EUROPEAN PATENT APPLICATION**
published in accordance with Art. 153(4) EPC

(43) Date of publication:
**07.02.2024 Bulletin 2024/06**

(21) Application number: **22780862.3**

(22) Date of filing: **29.03.2022**

(51) International Patent Classification (IPC):
*C21D 8/06* (2006.01)  *C22C 38/00* (2006.01)
*C22C 38/60* (2006.01)  *B23K 35/30* (2006.01)

(52) Cooperative Patent Classification (CPC):
**B23K 35/30; C21D 8/06; C22C 38/00; C22C 38/60**

(86) International application number:
**PCT/JP2022/015304**

(87) International publication number:
**WO 2022/210651 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021059001**

(71) Applicant: **NIPPON STEEL Stainless Steel
Corporation
Tokyo 100-0005 (JP)**

(72) Inventors:
• **KANEKO, Shigeru**
  **Tokyo 100-0005 (JP)**
• **KIKUCHI, Shin**
  **Tokyo 100-0005 (JP)**
• **FUKUMOTO, Shigeo**
  **Tokyo 100-0005 (JP)**

(74) Representative: **Zimmermann & Partner
Patentanwälte mbB
Postfach 330 920
80069 München (DE)**

(54) **DUPLEX STAINLESS STEEL WIRE ROD, AND DUPLEX STAINLESS STEEL WIRE**

(57) A duplex stainless steel wire rod is provided which has inclusions having a major axis of 1 $\mu$m or more and containing one or more kinds selected from S and O, and which has a chemical composition consisting of, in mass%, C: 0.005-0.10%, Si: 0.2-2.0%, Mn: 6.0% or less, P: 0.04% or less, S: 0.0050% or less, Ni: 2.0-14.0%, Cr: 18.0-28.0%, Mo: 0.05-5.50%, Cu: 2.0% or less, N: 0.10-0.35%, O: 0.0001-0.0060%, Al: 0.010-0.2%, Ca: 0.0025% or less, Mg: 0.0100% or less, optional elements, and the balance: Fe and impurities. A DF value is 20-60%, and a numerical proportion of Ca-Al-Mg-based oxides is 75% or more.

EP 4 317 467 A1

**Description**

TECHNICAL FIELD

The present invention relates to a duplex stainless steel wire rod and a duplex stainless steel wire.

BACKGROUND ART

Depending on the application, a duplex stainless steel may in some cases be welded for use. While various processes are available with regard to welding methods, in the case of welding a duplex stainless steel, for example, a gas metal arc welding process (also referred to as "GMA welding process") may in some cases be used.

The GMA welding process is a welding method in which a welding material such as a welding rod (weld wire) is used as an electrode, and a weld metal is formed from the molten welding material and the molten base metal, and at such time, usually a duplex stainless steel is also used as the welding material.

It is necessary that a duplex stainless steel for a welding material is to be subjected to a process for reducing the wire diameter during the production process. Therefore, the duplex stainless steel is required to have good hot workability. Thus, in order to improve the hot workability, it is necessary to sufficiently perform deoxidation and desulfurization to reduce the concentration of S in the steel. For this reason, Al is used for deoxidation.

On the other hand, when deoxidation is performed using Al, $MgO \cdot Al_2O_3$ spinels are easily formed. Such $MgO \cdot Al_2O_3$ spinels coarsen in the immersion nozzle during continuous casting and are liable to cause nozzle clogging, thereby reducing the manufacturability. For this reason, it is effective to contain Ca in order to suppress the formation of $MgO \cdot Al_2O_3$ spinels. On the other hand, when Ca is contained in a duplex stainless steel for a welding material, metal particles and slag are scattered and cause spatter, and the welding workability is lowered.

Therefore, Patent Document 1 discloses a duplex stainless steel in which the content of Ca, a ferrite phase fraction, inclusion compositions and the like in the steel are controlled to suppress the formation of $MgO \cdot Al_2O_3$ spinels, to thereby secure hot workability and welding workability while also suppressing the occurrence of nozzle clogging and the like.

LIST OF PRIOR ART DOCUMENTS

PATENT DOCUMENT

Patent Document 1: JP2018-171640A

SUMMARY OF INVENTION

TECHNICAL PROBLEM

However, in the duplex stainless steel disclosed in Patent Document 1, in order to secure the hot workability and the welding workability while also suppressing the occurrence of nozzle clogging and the like, the range of the content of Ca is defined as an extremely narrow range. Consequently, in the actual operation, the load for adjusting the chemical composition is large, and in some cases the manufacturability decreases. Further, from the viewpoint of the composition also, further room for improvement exists with respect to nozzle clogging. Accordingly, there is a problem that it is difficult to enable the suppression of nozzle clogging and also obtain both good hot workability and welding workability while also securing manufacturability.

An objective of the present invention is to solve the aforementioned problem and provide a duplex stainless steel wire rod which can be effective to suppress nozzle clogging and which has good hot workability and welding workability while also securing manufacturability.

SOLUTION TO PROBLEM

The present invention has been conceived to solve the problem described above, and the gist of the present invention is a duplex stainless steel wire rod described hereunder.

(1) A duplex stainless steel wire rod, which has inclusions that have a major axis of 1 $\mu$m or more and contain one or more kinds selected from S and O, wherein:

a chemical composition includes, in mass%,

C: 0.005 to 0.10%,
Si: 0.2 to 2.0%,
Mn: 6.0% or less,
P: 0.04% or less,
S: 0.0050% or less,
Ni: 2.0 to 14.0%,
Cr: 18.0 to 28.0%,
Mo: 0.05 to 5.50%,
Cu: 2.0% or less,
N: 0.10 to 0.35%,
O: 0.0001 to 0.0060%,
Al: 0.010 to 0.2%,
Ca: 0.0025% or less,
Mg: 0.0100% or less,
REM: 0 to 0.01%,
Ta: 0 to 0.10%,
B: 0 to 0.0020%,
W: 0 to 2.0%,
V: 0 to 1.00%,
Ti: 0 to 0.005%,
Nb: 0 to 0.10%,
Sn: 0 to 0.10%,
Sb: 0 to 0.30%,
Co: 0 to 1.00%,
Zr: 0 to 0.0050%,
Ga: 0 to 0.01%, and

the balance: Fe and impurities;
a DF value calculated by Formula (i) below is 20 to 60%; and
75% or more of the inclusions are Ca-Al-Mg-based oxides in numerical proportion, where the Ca-Al-Mg-based oxides are defined as oxides that contain CaO, $Al_2O_3$, and MgO and in which a sum total of these satisfies Formula (ii) below and a ratio between $Al_2O_3$ and MgO satisfies Formula (iii) below;

$$DF \ value \ = \ 7.2 \ \times \ (Cr+0.88Mo+0.78Si+2.2Ti+2.3V) \ - \ 8.9 \ \times \ (Ni+0.03Mn+0.72Cu+22C+21N) \ - \ 44.9 \ ... \ (i)$$

$$CaO + Al_2O_3 + MgO + ROx + Ta_2O_5 \geq 90\% \ ... \ (ii)$$

$$Al_2O_3/MgO \leq 1.25 \ ... \ (iii)$$

where, each symbol of an element in Formula (i) represents a content (mass%) of each element contained in the steel, and is made zero in a case where the element is not contained, and further, ROx in Formula (ii) represents REM oxides, and CaO, $Al_2O_3$, MgO, ROx, and $Ta_2O_5$ in Formulas (ii) and (iii) each represent a content in percent by mass of a corresponding oxide, and are made zero in a case where the oxide is not contained.

(2) The duplex stainless steel wire rod according to (1) above, wherein:
the chemical composition contains, in mass%, one or more elements selected from:

REM: 0.0005 to 0.01%,
Ta: 0.001 to 0.10%,
B: 0.0001 to 0.0020%,

W: 0.05 to 2.0%,
V: 0.01 to 1.00%,
Ti: 0.001 to 0.005%,
Nb: 0.02 to 0.10%,
Sn: 0.02 to 0.10%,
Sb: 0.01 to 0.30%,
Co: 0.07 to 1.00%,
Zr: 0.0001 to 0.0050%, and
Ga: 0.0001 to 0.01%.

The duplex stainless steel wire rod according to (1) or (2) above, that is for use as a welding material.

A duplex stainless steel wire in which the duplex stainless steel wire rod according to (1) or (2) above is used.

ADVANTAGEOUS EFFECTS OF INVENTION

According to the present invention, a duplex stainless steel wire rod which can be effective to suppress nozzle clogging and which has good hot workability and welding workability while also securing manufacturability can be obtained.

DESCRIPTION OF EMBODIMENTS

The present inventors conducted studies regarding a duplex stainless steel wire rod which is suitable as a welding material, and obtained the findings described in (a) to (c) below.

(a) When deoxidation is performed with Al to secure hot workability, $MgO \cdot Al_2O_3$ spinels are formed and nozzle clogging occurs. Although it is effective to add Ca in order to suppress the formation of the $MgO \cdot Al_2O_3 \cdot$ spinels, when Ca is contained, spatter easily occurs and the welding workability decreases.

(b) Therefore the present inventors investigated whether the formation of $MgO \cdot Al_2O_3 \cdot$ spinels can be suppressed by a method other than increasing the content of Ca. As a result, the present inventors discovered that by increasing the activity of MgO and also reducing the activity of $Al_2O_3$ in slag, MgO is preferentially formed, and not $MgO \cdot Al_2O_3$ spinels.

(c) By forming MgO, nozzle clogging can be suppressed and hot workability and welding workability can be secured. Further, since it is not necessary to control the content of Ca within a very strict range, this is also effective in actual operation.

One embodiment of the present invention has been made based on the above findings. The respective requirements of the present embodiment are described in detail hereunder.

1. Chemical composition of duplex stainless steel wire rod

The reasons for limiting each element of the duplex stainless steel wire rod are as follows. Note that, the symbol "%" in relation to content in the following description means "mass percent".

C: 0.005 to 0.10%

C (carbon) is an impurity that is present in the steel, and is also a powerful austenite former. If the content of C is low, a DF value which is described later will be markedly lowered. Therefore, the content of C is to be 0.005% or more, preferably 0.010% or more, and more preferably 0.015% or more. However, if C is excessively contained, C will combine with Cr during welding and during weld reheating, and carbides will form. As a result, the toughness and corrosion resistance of the weld metal will decrease. Therefore, the content of C is to be 0.10% or less. The content of C is preferably made 0.08% or less, and more preferably 0.025% or less.

Si: 0.2 to 2.0%

Si (silicon) is an element utilized as a deoxidizer during melting of the duplex stainless steel. Therefore, the content of Si is to be 0.2% or more. The content of Si is preferably made 0.3% or more, more preferably 0.35% or more, and further preferably 0.4% or more. However, if Si is excessively contained, the hot workability will decrease. Therefore, the content of Si is to be 2.0% or less. The content of Si is preferably made 1.2% or less, more preferably 1.0% or more, and further preferably 0.6% or less.

Mn: 6.0% or less

Mn (manganese) is a deoxidizer and also has an effect that increases the hot workability by fixing S as MnS. Further, Mn is an element that acts to stabilize austenite, and also has an effect that controls a DF value which is described later. However, if Mn is excessively contained, it leads to erosion of refractory during melting and a decrease in the corrosion resistance of the product. Therefore, the content of Mn is to be 6.0% or less. The content of Mn is preferably made 5.0% or less, more preferably 2.0% or less, and further preferably 1.0% or less. On the other hand, in order to obtain the aforementioned effects, the content of Mn is preferably made 0.5% or more, and more preferably 0.7% or more.

P: 0.04% or less

P (phosphorus) is an impurity element contained in the steel, and causes the toughness, hot workability, and corrosion resistance to decrease. Therefore, the content of P is to be 0.04% or less, and preferably is made 0.03% or less. Although it is preferable to decrease P as much as possible, if P is excessively reduced, the load during refining will increase and the raw material cost will increase. Therefore, the content of P is preferably 0.005% or more.

S: 0.0050% or less

S (sulfur) is an impurity element contained in the steel, and causes the toughness, hot workability, and corrosion resistance to decrease. Therefore, the content of S is to be 0.0050% or less, and preferably is made 0.0025% or less. Although it is preferable to decrease S as much as possible, if S is excessively reduced, the load during refining will increase and the raw material cost will increase. Therefore, the content of S is preferably 0.0002% or more.

Ni: 2.0 to 14.0%

Ni (nickel) is an element that contributes to stabilization of austenite. Further, Ni improves the corrosion resistance and toughness of weld metal, and also has an effect that suppresses hot cracking during welding. Therefore, the content of Ni is to be 2.0% or more. The content of Ni is preferably made 4.0% or more, and more preferably 6.0% or more. However, Ni is an expensive element, and therefore if Ni is excessively contained it will lead to an increase in cost. Accordingly, the content of Ni is to be 14.0% or less. The content of Ni is preferably made 12.0% or less, and more preferably 11.0% or less.

Cr: 18.0 to 28.0%

Cr (chromium) is a basic element of stainless steel and contributes to improving the corrosion resistance of weld metal. Therefore, the content of Cr is to be 18.0% or more. The content of Cr is preferably made 20.0% or more, more preferably 22.0% or more, and further preferably 24.0% or more. However, Cr promotes the formation of a δ phase in a weld zone, and reduces the toughness of the weld zone. Therefore, the content of Cr is to be 28.0% or less. The content of Cr is preferably made 27.0% or less.

Mo: 0.05 to 5.50%

Mo (molybdenum) is an effective element for improving corrosion resistance. Further, Mo has an effect that improves strength by solid-solution strengthening. Therefore, the content of Mo is to be 0.05% or more. The content of Mo is preferably made 0.10% or more, more preferably 3.00% or more, and further preferably is more than 4.00%. However, if Mo is excessively contained, the hot workability will decrease. Therefore, the content of Mo is to be 5.50% or less, and preferably is made 4.50% or less.

Cu: 2.0% or less

Cu (copper) is an element that contributes to stabilization of austenite, but if Cu is excessively contained, the hot workability will decrease. Therefore, the content of Cu is to be 2.0% or less, and preferably 1.0% or less. On the other hand, in order to obtain the aforementioned effect, the content of Cu is preferably made 0.05% or more, more preferably 0.5% or more, and further preferably is more than 0.5%.

N: 0.10 to 0.35%

N (nitrogen) is an element that contributes to stabilization of austenite. Further, N has an effect that improves corrosion resistance and strength. Therefore, the content of N is to be 0.10% or more, and preferably is made 0.20% or more. However, if N is excessively contained, in some cases surface defects may occur due to a decrease in hot workability. Therefore, the content of N is to be 0.35% or less, and preferably is made 0.30% or less.

O: 0.0001 to 0.0060%

O (oxygen) is the principal element contained in inclusions that cause nozzle clogging. Further, the lower the concentration of O in the steel is, the higher the solubility of Mg becomes, and hence it is desirable to reduce the concentration of O. Therefore, the content of O is to be 0.0060% or less. The content of O is preferably made 0.0030% or less, and more preferably 0.0015% or less. Although it is preferable to reduce O as much as possible, excessively reducing O will increase the load during refining. Therefore, the content of O is to be 0.0001% or more.

Al: 0.010 to 0.2%

Al (aluminum) has an effect that deoxidizes steel. Further, if deoxidation is insufficient, desulfurization will not proceed, which will lead to rusting in which sulfides serve as starting points, and a decrease in the hot workability. Further, suitable deoxidation is important for reducing MgO in the slag and increasing the concentration of Mg in the molten steel, and controling inclusions to have a high concentration of MgO. Therefore, the content of Al is to be 0.010% or more. However, if Al is excessively contained, Al will cause the workability to decrease. Therefore, the content of Al is to be 0.2% or less, and preferably 0.12% or less.

Ca: 0.0025% or less

Ca (calcium) has an effect that suppresses the formation of $MgO \cdot Al_2O_3$ spinels which cause nozzle clogging during casting. However, if excessively contained, Ca facilitates the occurrence of spatter during welding. Therefore, the content of Ca is to be 0.0025% or less. The content of Ca is preferably made 0.0020% or less, and more preferably 0.0015% or less. On the other hand, in order to obtain the aforementioned effect, the content of Ca is preferably made 0.0010% or more.

Mg: 0.0100% or less

Mg (magnesium) is an element that constitutes MgO. However, if Mg is excessively contained, excessive formation of inclusions will easily occur, which will contribute to a deterioration in properties. Therefore, the content of Mg is to be 0.0100% or less, and preferably 0.0030% or less. On the other hand, in order to obtain the aforementioned effect, the content of Mg is preferably made 0.0001% or more, and more preferably 0.0005% or more.

In addition to the aforementioned elements, one or more kinds selected from REM and Ta may also be contained within the ranges described below. The reasons for limiting each of these elements are described hereunder.

REM: 0 to 0.01%

REM (rare-earth metal) has high affinity with O, and hence has an effect that reduces the amount of $MgO \cdot Al_2O_3$ spinels that become a cause of nozzle clogging. Further, since REM has high affinity with S, REM improves hot workability by fixing S. Therefore, REM may be contained as necessary. However, if REM is excessively contained, nozzle clogging caused by REM oxides will be liable to occur. Therefore, the content of REM is to be 0.01% or less. The content of REM is preferably made 0.009% or less. On the other hand, in order to obtain the aforementioned effect, the content of REM is preferably made 0.0005% or more.

Here, the term "REM" refers to a total of 17 kinds of element including Sc, Y, and lanthanoids, and the term "content of REM" mentioned above refers to the total content of these elements. REM is mainly added industrially in the form of misch metal.

Ta: 0 to 0.10%

Ta (tantalum) has high affinity with O, and hence has an effect that reduces the amount of $MgO \cdot Al_2O_3$ spinels that become a cause of nozzle clogging. Therefore, Ta may be contained as necessary. However, excessively containing Ta will lead to a decrease in normal-temperature ductility and a decrease in toughness. Therefore, the content of Ta is to be 0.10% or less. The content of Ta is preferably made 0.08% or less. On the other hand, in order to obtain the aforementioned effect, the content of Ta is preferably made 0.001% or more.

In addition to the aforementioned elements, one or more kinds selected from B, W, V, Ti, Nb, Sn, Sb, Co, Zr, and Ga may also be contained within the ranges described below. The reasons for limiting each of these elements are described hereunder.

B: 0 to 0.0020%

B (boron) is an element that increases the strength of grain boundaries, and has an effect that improves workability. Therefore, B may be contained as necessary. However, excessively containing B will cause a decrease in ductility, and workability will decrease. Therefore, the content of B is to be 0.0020% or less, and is preferably made 0.0010% or less. On the other hand, in order to obtain the aforementioned effect, the content of B is preferably made 0.0001% or more, and more preferably 0.0005% or more.

W: 0 to 2.0%

W (tungsten) has an effect that further increases corrosion resistance. Therefore, W may be contained as necessary. However, W is an extremely expensive element, and even if W is contained in excess, an effect that is commensurate with the increase in the alloying cost will not be obtained. Therefore, the content of W is to be 2.0% or less. The content of W is preferably made 1.0% or less. On the other hand, in order to obtain the aforementioned effect, the content of W is preferably made 0.05% or more, and more preferably 0.25% or more.

V: 0 to 1.00%

V (vanadium) has an effect that increases corrosion resistance. Further, V is an element that affects a ferrite phase fraction, and may be contained as necessary for adjustment of a DF value that is described later. However, if V is excessively contained, the toughness will decrease. Therefore, the content of V is to be 1.00% or less. The content of V is preferably made 0.20% or less. On the other hand, in order to obtain the aforementioned effect, the content of V is preferably made 0.01% or more, and more preferably 0.10% or more.

Ti: 0 to 0.005%

Ti (titanium) is an element that affects a ferrite phase fraction, and may be contained as necessary for adjustment of a DF value that is described later. However, if Ti is excessively contained, TiN will form before casting, and facilitate nozzle clogging. Therefore, the content of Ti is to be 0.005% or less. On the other hand, in order to obtain the aforementioned effect, the content of Ti is preferably made 0.001% or more.

Nb: 0 to 0. 10%

Nb (niobium) has an effect that increases formability and corrosion resistance. Therefore, Nb may be contained as necessary. However, if Nb is excessively contained, the toughness will decrease. Therefore, the content of Nb is to be 0.10% or less, and is preferably made 0.05% or less. On the other hand, in order to obtain the aforementioned effect, the content of Nb is preferably made 0.02% or more.

Sn: 0 to 0.10%

Sn (tin) has an effect that further increases the corrosion resistance. Therefore, Sn may be contained as necessary. However, if Sn is excessively contained, the toughness will decrease. Therefore, the content of Sn is to be 0.10% or less. On the other hand, in order to obtain the aforementioned effect, the content of Sn is preferably made 0.02% or more.

Sb: 0 to 0.30%

Sb (antimony) has an effect that further increases the corrosion resistance. Therefore, Sb may be contained as necessary. However, if Sb is excessively contained, there is a risk that Sb will facilitate the formation of TiN and cause surface defects to occur. Therefore, the content of Sb is to be 0.30% or less, and is preferably made 0.10% or less. On the other hand, in order to obtain the aforementioned effect, the content of Sb is preferably made 0.01% or more.

Co: 0 to 1.00%

Co (cobalt) has an effect that further increases the corrosion resistance. Therefore, Co may be contained as necessary. However, Co is an extremely expensive element, and if excessively contained, the alloying cost will increase and the effect of Co will also be saturated. Therefore, the content of Co is to be 1.00% or less. The content of Co is preferably made 0.80% or less. On the other hand, in order to obtain the aforementioned effect, the content of Co is preferably made 0.07% or more, more preferably 0.10% or more, and further preferably 0.25% or more.

Zr: 0 to 0.0050%

Zr (zirconium) has an effect of fixing S, and can increase corrosion resistance and hot workability. Therefore, Zr may be contained as necessary. However, Zr has very high affinity with S, and if excessively contained Zr will form coarse sulfides in the molten steel, and on the contrary, the corrosion resistance will decrease. Therefore, the content of Zr is to be 0.0050% or less. The content of Zr is preferably made 0.0040% or less. On the other hand, in order to obtain the aforementioned effect, the content of Zr is preferably made 0.0001% or more.

Ga: 0 to 0.01%

Ga (gallium) has an effect that increases corrosion resistance. Therefore, Ga may be contained as necessary. However, if excessively contained, the alloying cost will increase. Therefore, the content of Ga is to be 0.01% or less. The content of Ga is preferably made 0.005% or less. On the other hand, in order to obtain the aforementioned effect, the content of Ga is preferably made 0.0001% or more.
In the chemical composition of the present embodiment, the balance is Fe and impurities. Here, the term "impurities" refers to components which, during industrial production of the steel, are mixed in from a raw material such as ore or scrap or due to various causes during the production process, and which are allowed within a range that does not adversely affect the present embodiment.

2. DF value: 20 to 60%

In the steel wire rod of the present embodiment, a DF value is controlled so as to fall within a predetermined range. The term "DF value" refers to a numerical value that is an index of a ferrite phase fraction in the steel, and is calculated by the following Formula (i). Note that, Formula (i) has been determined through regression of the relation between respective ferrite phase fractions obtained when steel wire rods were produced by changing the composition range of various elements, and the contents of the respective elements.
If the DF value is less than 20%, a ferrite phase fraction cannot be sufficiently secured, and the hot workability decreases. Therefore, the DF value is to be 20% or more, and preferably 30% or more. On the other hand, if the DF value is more than 60%, on the contrary, the hot workability will decrease. Therefore, the DF value is to be 60% or less, and preferably 55% or less.

$$DF \ value = 7.2 \times (Cr+0.88Mo+0.78Si+2.2Ti+2.3V) - 8.9 \times (Ni+0.03Mn+0.72Cu+22C+21N) - 44.9 \ ... \ (i)$$

Where, each symbol of an element in Formula (i) represents a content (mass%) of each element contained in the steel, and is made zero in a case where the element is not contained.

3. Inclusions

3-1. Ca-Al-Mg-based oxides

The duplex stainless steel wire rod according to the present embodiment has inclusions that have a major axis of 1 $\mu$m or more and that contain one or more kinds selected from S and O. Further, among these inclusions, oxides that contain CaO, $Al_2O_3$, and MgO and in which a sum total of these elements satisfies Formula (ii) below and a ratio between $Al_2O_3$ and MgO satisfies Formula (iii) below are defined as Ca-Al-Mg-based oxides.

$$CaO+Al_2O_3+MgO+ROx+Ta_2O_5 \geq 90\% \ ... \ (ii)$$

$$Al_2O_3/MgO \leq 1.25 \; ... \; (iii)$$

Further, ROx in Formula (ii) represents REM oxides, and CaO, $Al_2O_3$, MgO, ROx, and $Ta_2O_5$ in Formulas (ii) and (iii) each represent a content in percent by mass of a corresponding oxide, and is made zero in a case where the oxide is not contained.

In the steel wire rod of the present embodiment, the aforementioned Ca-Al-Mg-based oxides are actively caused to form. Here, the term "Ca-Al-Mg-based oxide" refers to an oxide that satisfies Formula (ii), that is, satisfies a requirement that the total amount of CaO, $Al_2O_3$, MgO, ROx, and $Ta_2O_5$ is, in mass%, 90% or more. Note that, if Formula (ii) is not satisfied, it indicates that a large number of lower oxides such as $SiO_2$ and MnO are present, which is not desirable because such oxides lead to the formation of surface defects and inner defects during processing. Although in many cases Ca-Al-Mg-based oxides are usually composed of oxides of Ca, Al, and Mg, for example, in a case where REM, Ta and the like are contained, oxides of REM ($RO_X$) and/or oxides of Ta may be included. This is because oxides of REM and Ta are usually unlikely to contribute to the occurrence of defects as described above. In addition, S may also be included.

Further, the Ca-Al-Mg-based oxides satisfy Formula (iii), that is, satisfy a requirement that the ratio between $Al_2O_3$ and MgO is 1.25 or less. This is because, if the ratio between $Al_2O_3$ and MgO is 1.25 or less, MgO is more likely to be formed as a crystallized phase during continuous casting in comparison to an $MgO \cdot Al_2O_3$ spinel.

3-2. Numerical proportion of Ca-Al-Mg-based oxides

The numerical proportion of Ca-Al-Mg-based oxides with respect to the aforementioned inclusions is to be 75% or more. The reason is that, if the numerical proportion of Ca-Al-Mg-based oxides is less than 75%, a crystallized phase mainly composed of $Al_2O_3$MgO spinels will be formed, and not a crystallized phase mainly composed of MgO, and consequently nozzle clogging will be liable to occur. The numerical proportion of Ca-Al-Mg-based oxides is preferably made 85% or more, and more preferably 90% or more.

3-3. Observation and method for measuring numerical proportion of Ca-Al-Mg-based oxides

A cross-section of a steel wire rod perpendicular to the wire-drawing direction is taken as an observation surface and is subjected to mirror-finish polishing. The observation surface is analyzed by SEM-EDS, and 100 or more inclusions having a major axis of 1 $\mu$m or more and containing O and/or S are randomly selected. Taking the 100 or more inclusions as a population, the elements contained in the compounds of the population are analyzed by SEM-EDS. At such time, inclusions that contain O and/or S and satisfy the requirements of the aforementioned Formulas (ii) and (iii) are determined to be Ca-Al-Mg-based oxides. At this time, the contents of the respective elements in the inclusions are identified, and using the identified elemental analysis values, each of Ca, Al, and Mg are taken to be all CaO, $Al_2O_3$, and MgO, and are defined as the contents (mass%) of CaO, $Al_2O_3$, and MgO in the oxides. Further, when inclusions are determined to be Ca-Al-Mg-based oxides, the proportion thereof with respect to the population of 100 inclusions is calculated as the numerical proportion (%) of the Ca-Al-Mg-based oxides.

Note that, although according to JIS G 0555: 2020 which is used as a general evaluation method for inclusions, two or more inclusions that are present and are separated from each other may be regarded as a single inclusion depending on the type and distance, in the present embodiment such inclusions are regarded as individual inclusions. Further, the term "major axis" of an inclusion refers to the length of the longest straight line connecting two points on the outer circumference of the inclusion.

Further, with respect to the observation surface, the reason for using a cross-section perpendicular to the wire-drawing direction is that it is difficult to make a uniform evaluation with respect to size in a direction parallel to the wire-drawing direction because the size is significantly affected by the rolling reduction, while in contrast, the size in the direction perpendicular to the wire-drawing direction does not change significantly with rolling. Therefore, it is considered that the size of the major axis of an inclusion in a cross-section perpendicular to the wire-drawing direction reflects the result of inclusion (oxide) control at the steel-making stage which is a key point of the present embodiment. Further, this similarly applies in a case where wire drawing process is performed to form a steel wire.

4. Steel wire

A steel wire is obtained as a result of subjecting the aforementioned steel wire rod to wire drawing process. The steel wire also inherits the properties of the steel wire rod described above, specifically, the chemical composition, and the numerical proportion of the Ca-Al-Mg-based oxides. Accordingly, if the aforementioned requirements regarding the chemical composition and the numerical proportion of Ca-Al-Mg-based oxides of the steel wire rod of the present embodiment are also satisfied in a steel wire, it can be inferred that the steel wire is a steel wire which uses the steel wire rod of the present embodiment.

5. Applications

The steel wire rod and steel wire according to the present embodiment are suitable for use as a welding material such as a welding rod.

6. Production method

A preferable method for producing the duplex stainless steel wire rod and the duplex stainless steel wire according to the present embodiment will now be described. The duplex stainless steel wire rod and the duplex stainless steel wire according to the present embodiment can be stably produced, for example, by the following production method.

First, it is preferable to melt the main raw material such as iron ore and perform primary refining. The conditions for the melting and the primary refining are not particularly limited. It suffices to follow a conventional method. Next, secondary refining is preferably performed. For the steel wire rod of the present embodiment, the chemical composition of the steel wire rod that is described above is adopted, in which Al is used as a deoxidizer. At such time, preferably addition of the Al into the molten steel is divided into two parts. This is described specifically below. In the initial stage of the secondary refining, the first addition of Al is performed to carry out a deoxidation treatment. Preferably the concentration of O in the molten steel is made 0.006% or less by performing this deoxidation treatment. Further, at this time, prior to the first addition of Al, as necessary, preliminary deoxidation may be performed using Si, Mn or the like.

Further, in order to, as much as possible, keep $MgO \cdot Al_2O_3$ spinels from being crystallized during casting and to control crystals to be mainly MgO, it is necessary to make the concentration of Mg high relative to the concentration of Al in the molten steel. This is because, as a result, MgO becomes stable and it becomes difficult for $MgO \cdot Al_2O_3$ spinels to form.

Therefore, in order to increase the concentration of Mg in the molten steel and cause Ca-Al-Mg-based oxides to form in a manner so that the numerical proportion of the Ca-Al-Mg-based oxides satisfies the range of the present embodiment, it is preferable that the activity of MgO in the slag increases, and on the other hand, the activity of $Al_2O_3$ is lowered. Specifically, the activity of MgO is preferably made 0.9 or more based on pure solid MgO, and the activity of $Al_2O_3$ is preferably made 0.05 or less based on pure solid $Al_2O_3$.

At this time, it suffices to calculate the respective activities of MgO and $Al_2O_3$ in the slag by measuring the composition of the slag and using thermodynamic data and commercially available thermodynamic calculation software. If the activity of MgO or $Al_2O_3$ in the slag does not satisfy the aforementioned range, it suffices to adjust the activity by the following method. To increase the activity of MgO, preferably, for example, CaO and/or MgO is added to the molten steel. Further, to lower the $Al_2O_3$ activity, preferably, for example, CaO is added to the molten steel.

Note that, although it is also conceivable to adopt a method in which, after increasing the concentration of Mg in the molten steel, an Mg alloy is added or Ti is added to the molten steel, in such a case it will be difficult to adjust the chemical composition to within the ranges of the present embodiment, and nozzle clogging will easily occur. Therefore, as described above, it is preferable to make the activities of MgO and $Al_2O_3$ in the slag fall within the aforementioned ranges. As a result, the concentration of Mg in the molten steel can be stably increased, and the Ca-Al-Mg-based oxides that are a requirement according to the present embodiment can be sufficiently formed. Next, in the latter half of the secondary refining, it is preferable to perform the second addition of Al to adjust the composition of the molten steel. The conditions of the secondary refining other than the above conditions are not particularly limited. It suffices to follow a conventional method and to perform adjustment so as to satisfy the range of the chemical composition of the steel wire rod according to the present embodiment.

Next, the obtained molten steel is preferably subjected to continuous casting and formed into a cast piece. Preferably, the obtained cast piece is heated to within a range of, for example, 1000 to 1300°C, and hot rolling is performed. Further, at such time, the rolling finishing temperature is preferably set to fall within the range of, for example, 900 to 1100°C, and the total reduction of area is preferably made 90.0% or more. After this hot rolling, a steel wire rod in which the steel micro-structure is duplex stainless steel is formed. Note that, although the diameter of the steel wire rod at such time is not particularly limited, usually the diameter is preferably made to fall within the range of 5.0 to 6.0 mm. Note that, annealing, pickling and the like may be performed as appropriate.

Furthermore, preferably the obtained steel wire rod is subjected to wire drawing process to form a steel wire. The wire drawing process may be performed multiple times, and as necessary heat treatments may be performed when performing the wire drawing process. The heat treatment temperature at such time is preferably set, for example, within the range of 1000 to 1100°C, and it suffices that the micro-structure after the heat treatments is a duplex stainless steel micro-structure. Pickling or the like may also be performed as appropriate. Note that, although the diameter of the steel wire at this time is not particularly limited, usually the diameter is preferably made to fall within a range of 0.5 to 1.5 mm.

Hereunder, the steel wire rod and the steel wire according to the present embodiment are described more specifically by way of examples, although the present embodiment is not limited to these examples.

EXAMPLES

Molten steels having the chemical compositions shown in Table 1 were each poured into a tundish, and formed into a cast piece by casting using a mold. Note that, when producing the molten steel, deoxidation with Al was performed in a secondary refining. At such time, addition of the Al was divided into two parts, and after the concentration of O in the molten steel was made 0.006% or less after the first addition of Al was performed, the slag composition was controlled to adjust the respective activities of MgO and $Al_2O_3$ in the slag. Here, with respect to the activity in the slag of each example, as shown in Table 2 that is described later, the activity in the table was calculated using thermodynamic calculation software based on the pure solid MgO and pure solid $Al_2O_3$, respectively. Thereafter, the second addition of Al was performed. Note that, each chemical composition shown in Table 1 is the chemical composition after adjustment of the component range of each element was completely finished.

[Table 1]

Table 1

Chemical Composition (mass%; balance: Fe and impurities)

| Steel No. | C | Si | Mn | P | S | Ni | Cr | Mo | Cu | N | O | Al | Ca | Mg | REM | Ta | Others | DF Value |
|---|---|---|---|---|---|---|---|---|---|---|---|---|---|---|---|---|---|---|
| A1 | 0.016 | 1.26 | 4.6 | 0.039 | 0.0042 | 13.9 | 26.3 | 5.21 | 0.23 | 0.182 | 0.0017 | 0.158 | 0.0015 | 0.0031 | 0.0074 | 0.002 | B:0.0017, W:0.91, Ti:0.003, Co:0.17 | 21.0 |
| A2 | 0.062 | 0.22 | 3.1 | 0.014 | 0.0019 | 4.7 | 20.1 | 3.39 | 0.07 | 0.157 | 0.0002 | 0.107 | 0.0007 | 0.0016 | 0.0028 | - | B:0.0008, 71:0.001, Co:0.57, Ga:0.01 | 38.0 |
| A3 | 0.024 | 1.12 | 3.6 | 0.025 | 0.0005 | 9.3 | 27.3 | 5.42 | 0.45 | 0.342 | 0.0018 | 0.093 | 0.0008 | 0.0030 | - | 0.027 | B:0.0002, W:0.09, Ti:0.003 | 37.1 |
| A4 | 0.006 | 1.77 | 0.5 | 0.013 | 0.0032 | 5.4 | 20.1 | 4.12 | 1.48 | 0.175 | 0.0003 | 0.136 | 0.0008 | 0.0011 | 0.0070 | 0.076 | 71:0.005, Sn:0.04, Sb:0.02, Co:0.25 | 44.4 |
| A5 | 0.012 | 1.80 | 1.4 | 0.040 | 0.0006 | 6.5 | 20.6 | 4.75 | 0.51 | 0.156 | 0.0007 | 0.079 | 0.0005 | 0.0012 | 0.0091 | - | B:0.0017, V:0.27, Zr:0.0039 | 55.1 |
| A6 | 0.098 | 1.38 | 1.2 | 0.035 | 0.0010 | 8.0 | 21.5 | 3.93 | 0.92 | 0.101 | 0.0055 | 0.011 | 0.0021 | 0.0005 | - | 0.093 | B:0.0010, V:0.47, Ti:0.004, Co:0.94, Ga:0.0045 | 34.9 |
| A7 | 0.083 | 1.87 | 5.3 | 0.038 | 0.0048 | 10.3 | 27.7 | 5.07 | 1.86 | 0.259 | 0.0025 | 0.026 | 0.0012 | 0.0016 | 0.0049 | 0.072 | B:0.0017, Ti:0.002 | 27.5 |
| A8 | 0.071 | 0.39 | 5.1 | 0.031 | 0.0017 | 6.6 | 24.1 | 4.70 | 1.82 | 0.128 | 0.0018 | 0.124 | 0.0013 | 0.0042 | 0.0081 | 0.074 | Nb:0.09, Sn:0.04 | 51.0 |

(continued)

| Steel No. | Chemical Composition (mass%; balance: Fe and impurities) | | | | | | | | | | | | | | | | | DF Value |
|---|---|---|---|---|---|---|---|---|---|---|---|---|---|---|---|---|---|---|
| | C | Si | Mn | P | S | Ni | Cr | Mo | Cu | N | O | Al | Ca | Mg | REM | Ta | Others | |
| A9 | 0.055 | 0.59 | 5.9 | 0.029 | 0.0006 | 4.2 | 24.0 | 1.09 | 0.41 | 0.154 | 0.0012 | 0.141 | 0.0020 | 0.0021 | 0.0008 | - | B:0.0007, Zr:0.004, Nb:0.03 | 57.0 |
| A10 | 0.006 | 0.65 | 4.5 | 0.019 | 0.0043 | 13.8 | 27.4 | 4.84 | 0.72 | 0.118 | 0.0018 | 0.072 | 0.0024 | 0.0019 | - | 0.044 | Ti:0.001 | 34.8 |
| A11 | 0.097 | 0.56 | 0.9 | 0.029 | 0.0013 | 6.5 | 23.8 | 2.97 | 1.69 | 0.128 | 0.0017 | 0.109 | 0.0011 | 0.0017 | - | - | B:0.0006, Sb:0.24, Zr:0.0043 | 36.6 |
| A12 | 0.011 | 0.91 | 2.1 | 0.017 | 0.0023 | 8.7 | 26.0 | 0.08 | 1.26 | 0.183 | 0.0007 | 0.182 | 0.0019 | 0.0015 | 0.0012 | - | B:0.0019 | 25.5 |
| A13 | 0.075 | 1.63 | 5.2 | 0.039 | 0.0027 | 7.2 | 26.3 | 0.44 | 1.10 | 0.284 | 0.0033 | 0.056 | 0.0003 | 0.0034 | 0.0055 | - | B:0.0016, V:0.95, Ti:0.005, Co:0.19 | 31.9 |
| A14 | 0.097 | 0.98 | 0.1 | 0.014 | 0.0018 | 9.7 | 27.8 | 4.93 | 1.25 | 0.125 | 0.0040 | 0.035 | 0.0017 | 0.0003 | - | 0.017 | W:0.44, Nb:0.09, Sn:0.08 | 55.3 |
| A15 | 0.020 | 0.43 | 1.1 | 0.025 | 0.0006 | 10.6 | 26.0 | 4.40 | 0.50 | 0.214 | 0.0022 | 0.042 | 0.0009 | 0.0015 | - | - | W:0.05, V:0.09, Ti:0.003, Co:0.07 | 32.4 |
| A16 | 0.037 | 1.32 | 2.5 | 0.023 | 0.0007 | 7.2 | 23.5 | 4.92 | 1.56 | 0.205 | 0.0008 | 0.174 | 0.0018 | 0.0024 | - | - | | 42.6 |
| a1 | <u>0.133</u> | 0.73 | 0.2 | 0.015 | 0.0030 | 9.6 | 25.7 | 2.88 | 1.39 | 0.130 | 0.0007 | 0.111 | 0.0001 | 0.0003 | 0.0093 | - | B:0.0004, V:0.83, Co:0.18 | 31.5 |
| a2 | 0.062 | <u>2.44</u> | 3.9 | 0.027 | 0.0001 | 8.3 | <u>28.8</u> | 2.75 | 0.56 | <u>0.370</u> | 0.0034 | 0.050 | 0.0016 | 0.0002 | - | - | W:1.1, Nb:0.09, Sb:0.27, Zr:0.0020, Ga:0.63 | 33.8 |

(continued)

| Steel No. | Chemical Composition (mass%; balance: Fe and impurities) | | | | | | | | | | | | | | | | | DF Value |
| --- | --- | --- | --- | --- | --- | --- | --- | --- | --- | --- | --- | --- | --- | --- | --- | --- | --- | --- |
| | C | Si | Mn | P | S | Ni | Cr | Mo | Cu | N | O | Al | Ca | Mg | REM | Ta | Others | |
| a3 | 0.091 | 1.42 | <u>6.3</u> | 0.017 | 0.0009 | <u>15.2</u> | 27.5 | 2.06 | 1.70 | 0.112 | 0.0013 | 0.186 | <u>0.0029</u> | 0.0019 | <u>0.023</u> | - | B:0.0014, V:0.96, Sn: 0.07, Co: 0.97 | <u>3.4</u> |
| a4 | 0.098 | 1.14 | 0.2 | <u>0.045</u> | <u>0.0068</u> | 9.7 | 27.5 | 3.30 | 0.80 | 0.135 | <u>0.0065</u> | <u>0.127</u> | 0.0006 | 0.0024 | - | 0.14 | Nb:0.09 | 44.5 |
| a5 | 0.051 | 1.43 | 1.5 | 0.011 | 0.0049 | 12.9 | 24.5 | <u>5.80</u> | <u>2.10</u> | 0.171 | 0.0036 | <u>0.008</u> | 0.0011 | 0.0003 | - | - | | <u>5.7</u> |
| a6 | 0.022 | 1.13 | 5.7 | <u>0.026</u> | 0.0021 | 6.2 | 23.2 | 3.48 | 1.40 | 0.165 | 0.0019 | 0.117 | 0.0001 | 0.0008 | - | 0.04 | Co:0.77, Zr: 0.0036 | 49.7 |
| a7 | 0.061 | 1.39 | 0.9 | 0.010 | 0.0020 | 7.8 | 23.1 | 0.33 | 0.10 | 0.138 | 0.0004 | 0.036 | 0.0017 | 0.0002 | - | - | | 23.3 |
| a8 | 0.007 | 0.87 | 22 | 0.021 | 0.0013 | 9.3 | 27.1 | 0.42 | 0.26 | 0.219 | 0.0005 | 0.038 | 0.0019 | 0.0002 | - | - | | 30.4 |

Underline: Means that the value deviates from the requirements of the present embodiment.

Each obtained cast piece was heated to 1100°C, and hot rolling was performed under conditions of a rolling starting temperature of 1080°C, a rolling finishing temperature of 1050°C, and a total reduction of area of 99.9% to produce a steel wire rod having a wire diameter of 5.5 mm. Next, the obtained steel wire rod was subjected to primary wire drawing process, and thereafter a strand heat treatment at 1000 to 1100°C was performed, and secondary wire drawing process was then performed to produce a duplex stainless steel wire having a wire diameter of 1.0 mm.

The ease with which nozzle clogging occurred in the production stage, the hot workability, and the welding workability when performing welding using the steel wire as a welding material were evaluated according to the procedures described hereunder.

(Nozzle clogging)

Nozzle clogging during casting was determined according to the presence or absence of blockage of the inner wall of the nozzle after casting. A case where the molten steel could be completely cast was described as "Good", and a case where, furthermore, there was no clogging tendency was described as "Excellent". On the other hand, a case where nozzle clogging occurred and a problem such as that continuous casting could not be performed was described as "Not Good".

(Hot workability)

The hot workability was evaluated by confirming the presence or absence of surface defects on the steel wire rod after hot rolling, and in a case where there were no defects, the hot workability was evaluated as being satisfactory and was described as "Good". On the other hand, in a case where a surface defect having a depth of 0.15 mm or more occurred, the hot workability was evaluated as being not good, and was described as "Not Good".

(Welding workability)

The welding workability was evaluated based on whether or not spatter occurred when welding was performed. Specifically, inside a collection box made of copper, a weld bead was formed for one minute on a duplex stainless steel plate (NSSC 2120, manufactured by NIPPON STEEL Stainless Steel Corporation) by a bead-on-plate method using a welding rod composed of the steel wire that was the object to be tested. The test conditions adopted at such time were a welding current of 150 A, a voltage of 24 V, a welding speed of 30 cm/min, a shielding gas of 100% $CO_2$ (20 l/min), and no preheating. In a case where spatter did not occur inside the box during formation of the weld bead, the welding workability was evaluated as being satisfactory and was described as "Good". On the other hand, in a case where spatter occurred, the welding workability was evaluated as being not good, and was described as "Not Good". The results are summarized in Table 2 below.

[Table 2]

Table 2

| Symbol | Steel No. | Slag Composition | | Ca-Al-Mg-based Oxides | Evaluation | | | |
|---|---|---|---|---|---|---|---|---|
| | | MgO Activity | Al$_2$O$_3$ Activity | Numerical Proportion (%) | Nozzle Clogging Presence/Absence | Hot Workability | Welding Workability | |
| B1 | A1 | 0.92 | 0.0057 | 90.0 | Excellent | Good | Good | Inventive Examples of Present Invention |
| B2 | A2 | 0.95 | 0.0098 | 87.0 | Good | Good | Good | |
| B3 | A3 | 0.94 | 0.0019 | 94.0 | Excellent | Good | Good | |
| B4 | A4 | 0.95 | 0.0266 | 76.0 | Good | Good | Good | |
| B5 | A5 | 0.95 | 0.0211 | 81.0 | Good | Good | Good | |
| B6 | A6 | 0.92 | 0.0077 | 98.0 | Excellent | Good | Good | |
| B7 | A7 | 0.91 | 0.0056 | 97.0 | Excellent | Good | Good | |
| B8 | A8 | 0.96 | 0.0003 | 88.0 | Good | Good | Good | |
| B9 | A9 | 0.96 | 0.0062 | 80.0 | Good | Good | Good | |
| B10 | A10 | 0.96 | 0.0072 | 85.0 | Good | Good | Good | |
| B11 | A11 | 0.96 | 0.0149 | 81.0 | Good | Good | Good | |
| B12 | A12 | 0.92 | 0.0327 | 79.0 | Good | Good | Good | |
| B13 | A13 | 0.99 | 0.0008 | 94.0 | Excellent | Good | Good | |
| B14 | A14 | 0.95 | 0.0128 | 77.0 | Good | Good | Good | |
| B15 | A15 | 0.94 | 0.0027 | 94.0 | Excellent | Good | Good | |
| B16 | A16 | 0.96 | 0.0078 | 91.0 | Excellent | Good | Good | |
| b1 | <u>a1</u> | 0.81 * | 0.0363 | <u>34.0</u> | Not Good | Good | Good | Comparative Examples |
| b2 | <u>a2</u> | 0.92 | 0.2162 * | <u>51.0</u> | Not Good | Good | Good | |
| b3 | <u>a3</u> | 0.99 | 0.0365 | 79.0 | Good | Not Good | Not Good | |
| b4 | <u>a4</u> | 0.98 | 0.0036 | <u>58.0</u> | Good | Not Good | Good | |
| b5 | <u>a5</u> | 1.00 | 0.0219 | 91.0 | Good | Not Good | Good | |
| b6 | <u>a6</u> | 0.96 | 0.0552 * | <u>72.0</u> | Not Good | Good | Good | |
| b7 | a7 | 0.81 * | 0.0489 | <u>68.0</u> | Not Good | Good | Good | |
| b8 | a8 | 0.91 | 0.0679 * | <u>69.0</u> | Not Good | Good | Good | |

Underline: Means that the value deviates from the requirements of the present embodiment.

*: Means that the value deviates from the preferable production conditions.

As shown in Table 2, in the examples denoted by symbols B1 to B15, because the requirements regarding the chemical composition and the Ca-Al-Mg-based oxides of the present embodiment were satisfied, nozzle clogging did not occur, and the hot workability and welding workability were good. On the other hand, in the examples denoted by symbols b1 to 8, at least one requirement among the requirements regarding the chemical composition and the Ca-Al-Mg-based oxides of the present embodiment was not satisfied. Consequently, the result was that at least one of nozzle clogging, a decrease in hot workability, and a decrease in welding workability occurred.

In the example denoted by symbol b 1, because the activity of MgO was low, the requirement regarding Ca-Al-Mg-based oxides was not satisfied, and nozzle clogging occurred. In the example denoted by symbol b2, because the activity of Al$_2$O$_3$ was high, the requirement regarding Ca-Al-Mg-based oxides was not satisfied, and nozzle clogging occurred.

In the example denoted by symbol b3, because the DF value was low, the hot workability was poor. Further, when the welding workability using the obtained steel wire was evaluated, spatter occurred because Ca was high. In the example denoted by symbol b4, the hot workability decreased because the concentration of S was high. Further, although the requirement regarding the Ca-Al-Mg-based oxides was not satisfied due to the concentrations of $SiO_2$ and MnO being high because the concentration of O was high, nozzle clogging did not occur because the amount of $MgO \cdot Al_2O_3$ spinels which cause nozzle clogging was small.

In the example denoted by symbol b5, the DF value was low, and consequently the hot workability decreased. In the example denoted by symbol b6, because the $Al_2O_3$ activity was high, the requirement regarding Ca-Al-Mg-based oxides of the present embodiment was not satisfied, and nozzle clogging occurred. In the examples denoted by symbols b7 and b8, because the MgO activity was low or the $Al_2O_3$ activity was high, the requirement regarding Ca-Al-Mg-based oxides of the present embodiment was not satisfied, and nozzle clogging occurred.

**Claims**

1. A duplex stainless steel wire rod, which has inclusions that have a major axis of 1 $\mu$m or more and contain one or more kinds selected from S and O, wherein:

   a chemical composition comprises, in mass%,

   C: 0.005 to 0.10%,
   Si: 0.2 to 2.0%,
   Mn: 6.0% or less,
   P: 0.04% or less,
   S: 0.0050% or less,
   Ni: 2.0 to 14.0%,
   Cr: 18.0 to 28.0%,
   Mo: 0.05 to 5.50%,
   Cu: 2.0% or less,
   N: 0.10 to 0.35%,
   O: 0.0001 to 0.0060%,
   Al: 0.010 to 0.2%,
   Ca: 0.0025% or less,
   Mg: 0.0100% or less,
   REM: 0 to 0.01%,
   Ta: 0 to 0.10%,
   B: 0 to 0.0020%,
   W: 0 to 2.0%,
   V: 0 to 1.00%,
   Ti: 0 to 0.005%,
   Nb: 0 to 0.10%,
   Sn: 0 to 0.10%,
   Sb: 0 to 0.30%,
   Co: 0 to 1.00%,
   Zr: 0 to 0.0050%,
   Ga: 0 to 0.01%, and
   the balance: Fe and impurities;

   a DF value calculated by Formula (i) below is 20 to 60%; and
   75% or more of the inclusions are Ca-Al-Mg-based oxides in numerical proportion, where the Ca-Al-Mg-based oxides are defined as oxides that contain CaO, $Al_2O_3$, and MgO and in which a sum total of these satisfies Formula (ii) below and a ratio between $Al_2O_3$ and MgO satisfies Formula (iii) below;

$$DF\ value = 7.2 \times (Cr+0.88Mo+0.78Si+2.2Ti+2.3V) - 8.9 \times (Ni+0.03Mn+ 0.72Cu+22C+21N) - 44.9 \ ...\ (i)$$

$$CaO + Al_2O_3 + MgO + ROx + Ta_2O_5 \geq 90\% \ ...\ (ii)$$

$$Al_2O_3/MgO \leq 1.25 \; ... \; \text{(iii)}$$

where, each symbol of an element in Formula (i) represents a content (mass%) of each element contained in the steel, and is made zero in a case where the element is not contained, and further, ROx in Formula (ii) represents REM oxides, and CaO, $Al_2O_3$, MgO, ROx, and $Ta_2O_5$ in Formulas (ii) and (iii) each represent a content in percent by mass of a corresponding oxide, and are made zero in a case where the oxide is not contained.

2. The duplex stainless steel wire rod according to claim 1, wherein:
   the chemical composition contains, in mass%, one or more elements selected from:

   REM: 0.0005 to 0.01%,
   Ta: 0.001 to 0.10%,
   B: 0.0001 to 0.0020%,
   W: 0.05 to 2.0%,
   V: 0.01 to 1.00%,
   Ti: 0.001 to 0.005%,
   Nb: 0.02 to 0.10%,
   Sn: 0.02 to 0.10%,
   Sb: 0.01 to 0.30%,
   Co: 0.07 to 1.00%,
   Zr: 0.0001 to 0.0050%, and
   Ga: 0.0001 to 0.01%.

3. The duplex stainless steel wire rod according to claim 1 or claim 2, that is for use as a welding material.

4. A duplex stainless steel wire in which the duplex stainless steel wire rod according to claim 1 or claim 2 is used.

## INTERNATIONAL SEARCH REPORT

| International application No. |
| --- |
| **PCT/JP2022/015304** |

**A.    CLASSIFICATION OF SUBJECT MATTER**

*C21D 8/06*(2006.01)i; *C22C 38/00*(2006.01)i; *C22C 38/60*(2006.01)i; *B23K 35/30*(2006.01)i
FI:    C22C38/00 302H; C22C38/60; B23K35/30 320B; C21D8/06 B

According to International Patent Classification (IPC) or to both national classification and IPC

**B.    FIELDS SEARCHED**

Minimum documentation searched (classification system followed by classification symbols)

C21D8/06; C22C38/00; C22C38/60; B23K35/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2018-171640 A (NIPPON STEEL & SUMIKIN STAINLESS STEEL CORP.) 08 November 2018 (2018-11-08) | 1-4 |
| A | JP 2019-178363 A (NIPPON STEEL STAINLESS STEEL CORP.) 17 October 2019 (2019-10-17) | 1-4 |
| A | JP 2009-7638 A (NIPPON YAKIN KOGYO CO., LTD.) 15 January 2009 (2009-01-15) | 1-4 |
| A | WO 2013/027253 A1 (NIPPON YAKIN KOGYO CO., LTD.) 28 February 2013 (2013-02-28) | 1-4 |
| P, A | WO 2021/172378 A1 (NIPPON STEEL STAINLESS STEEL CORP.) 02 September 2021 (2021-09-02) | 1-4 |

☐ Further documents are listed in the continuation of Box C.    ☑ See patent family annex.

| *    Special categories of cited documents: | "T"    later document published after the international filing date or priority date and not in conflict with the application but cited to understand the principle or theory underlying the invention |
| --- | --- |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
| --- | --- |
| **10 June 2022** | **28 June 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/015304**

| Patent document cited in search report | | | Publication date (day/month/year) | Patent family member(s) | | | Publication date (day/month/year) |
|---|---|---|---|---|---|---|---|
| JP | 2018-171640 | A | 08 November 2018 | (Family: none) | | | |
| JP | 2019-178363 | A | 17 October 2019 | (Family: none) | | | |
| JP | 2009-7638 | A | 15 January 2009 | (Family: none) | | | |
| WO | 2013/027253 | A1 | 28 February 2013 | US | 2014/0205486 | A1 | |
| | | | | EP | 2749669 | A1 | |
| | | | | CN | 103748249 | A | |
| | | | | KR | 10-2014-0036325 | A | |
| WO | 2021/172378 | A1 | 02 September 2021 | TW | 202138587 | A | |

Form PCT/ISA/210 (patent family annex) (January 2015)

**EP 4 317 467 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018171640 A